# EUROPEAN PATENT APPLICATION

(11) **EP 2 105 874 A1**
(43) Date of publication of application: **30.09.2009**
(21) Application number: 08251103.1
(22) Date of filing: 27.03.2008
(51) Int. Cl.: G06Q 30/00

(54) **Multi-site service charging protocol**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

A multi-site service charging protocol is disclosed. A data structure 303, 308 which includes chargeable elements relating generally to the multi-site service, and chargeable elements relating to the provision of network resources for each site involved in the multi-site service is transferred between a customer terminal 44 and an online charging system 30 in the network. In this way a customer who provides a description of a multi-site service is able to instantaneously receive advice of the charge for the multi-site service, and the network operator is able to instantaneously charge the customer for the multi-site service. Furthermore, the customer is later able to analyse his communications costs broken down by multi-site service and/or by site.

## Description

The present invention relates to a data structure for representing a multi-site service and a multi-site service charging protocol using said data structure. It has particular utility in relation to the support of virtual private networks provided using the communications network.

Communications network operators have conventionally billed their customers rental charges for communications lines and often also billed customers for usage of those lines. Increasingly, customers expect to be provided with access to a summary and/or breakdown of their telecommunications costs shortly after they have incurred those costs. They also expect to be able to set spending limits (from their point of view) or be subject to credit controls (from the network operators point of view).

Telecommunication equipment vendors are therefore working on agreeing standard interfaces to billing and credit control systems. The principal standards setting organisations working in this area are the Internet Engineering Task Force (IETF), the Third Generation Partnership Project (3GPP) and the Parlay group.

The IETF has specified the Diameter protocol (RFC3588) which defines an AAA (Authentication, Authorisation and Accounting Protocol), and the Diameter Credit Control Application (RFC4006), which extends the base Diameter protocol and provides a means of implementing real-time (i.e. instantaneous) credit control for various end user services across a communications network, including network access, SIP (session initiation protocol) services, messaging and download services. The Credit Control Application specifies a range of AVPs (Attribute Value Pairs) which can be used to convey information related to charging for such services and granting credit to users which may be used for particular network applications and services, where credit may be described in terms of time, money or data volumes.

3GPP have done extensive work on charging for mobile communication services which includes real-time (a.k.a. "online") charging and specifies methods of providing credit to end users (e.g. for pre-pay services).

The most relevant 3GPP specifications are as follows:
TS32.240 - "Charging architecture and principles"
TR32.815 - "Online charging system (OCS) architecture study"
TS32.296 - "Online charging system (OCS): Applications and interfaces"
TS32.299 - "Diameter charging applications"
TS32.297 - "Charging Data Record (CDR) file format and transfer"
TS32.260 - "IP Multimedia Subsystem (IMS) charging"

3GPP define the concept of "online charging" (synonymous with real-time charging) as a *"charging mechanism where charging information can affect, in real-time, the service rendered and therefore a direct interaction of the charging mechanism with session*/*service control is required",* whereas the alternative "offline charging" is defined as a *"charging mechanism where charging information does not affect, in real-time, the service rendered".*

The Parlay group have also done some work on real-time charging and have produced APIs which allow users to query their account details and to be charged for communication services in real-time. The most relevant documents are:
• ETSI ES 203 915-11 v1.1.1 (2005-04) Open Service Access (OSA) Application Programming Interface, Part 11: Account Management SCF (Parlay 5)
• ETSI ES 203 915-12 v1.1.1 (2005-04) Open Service Access (OSA) Open Service Access (OSA) Application Programming Interface, Part 12: Charging SCF (Parlay 5)
• ETSI ES 202 391-6 v1.1.1 (2005-03) Open Service Access (OSA) Parlay X Web Services, Part 6: Payment
• ETSI ES 202 391-7 v1.1.1 (2005-03) Open Service Access (OSA) Parlay X Web Services, Part 7: Account Management

In contrast to 3GPP, Parlay have focussed on producing an interface which exposes various capabilities from the network towards end users via a secure API. In particular, ES 202 391-6 provides a simple web services interface which allows users to be charged for services in real-time, measured in terms of monetary amounts or volume of units (e.g. time or data). ES 202 391-7 provides a simple web services interface to allow users to query their account balance. ES 203 915-11 and ES 203 915-12 provide more comprehensive facilities for payment and account management, but still do not meet the requirements for charging for complex multi-site communication services which may be delivered over IP-VPN infrastructure to many end-users, but where the account is paid by a single customer entity.

Whilst the above standards provide real-time charging and credit control for simple communications services (e.g. the provision of bandwidth over a single end-to-end path), they do not stipulate how an communications network operator might provide real-time billing and credit control for more complex services which, in effect, are a composition of simple services - for example, a video-conference might be regarded as a composite service made up of the provision and configuration of a video-conference bridge and each of the links from the video-conference bridge to each site involved in the video-conference.

Enterprises such as multi-site firms, universities and government departments are increasingly expecting communications capacity to support the provision of services to be provided 'on-demand'. Whilst much effort has focussed on providing such services with the necessary scale and speed (see, for example, the article 'Use of Policy Management to Achieve Flexibility in the Delivery of Network-Centric ICT Solutions', by M P Dames et al in the BT Technology Journal Vol. 23, No. 3, July 2005), little attention has been paid to the need to provide a supporting mechanism which charges customers for such services in a way which allows those customers to break down the costs of composite services when analysing their overall communications bill.

According to a first aspect of the present invention there is provided a data structure representing a multi-site network service which data structure includes one or more charges generally relating to the provision of the multi-site network service and, for each site involved in the multi-site network service, site-specific charges for at least some of the component resources used in providing the multi-site application to the site.

By representing a multi-site network service with a data structure which includes one or more application entries generally relating to the multi-site network service and, for each site involved in the multi-site network service, site-specific entries for at least some of the component resources used in providing the multi-site application to the site, the same format of charging information can be carried both within the network operator's domain (between network equipment and charging systems) and exposed to customers (either service providers or end customer organisations) and end users.

Note that site in this context might include, for example, a building, campus or geographic location.

The term "multi-site service" in this context specifically includes (but is not limited to) video broadcast services, video conferencing services, voice over IP and audio conferencing services, FTP, Peer-to-peer, web / HTTP and XML based applications, and other collaborative applications where two or more sites or users on the network receive service simultaneously, but where there is only one customer who is billed for the service.

The invention is especially advantageous when said multi-site network service involves three or more sites.

Preferably, either said application entries or said site-specific entries include quotas which set limits on the amount of a multi-site network service a customer, or a specific customer site might use. The quota might be expressed in terms of cumulative cost of the multi-site service, number of uses of the multi-site service in a given time period, duration of usage of the multi-site service in a given time period, or the amount of network traffic generated in using the multi-site service in a given time period.

Preferably, the data structure includes charging fields which are initially set null, but whose value is thereafter set by network charging equipment. This allows the format of the data structure to be preserved despite rating or charging processing being carried out by network charging equipment.

According to a second aspect of the present invention, there is provided a method of rating multi-site services in a communications network, said method comprising operating a rating computer to:
receive a request for a multi-site service from a customer, said request being supplied with a session description listing component resources required in providing said multi-site service;
rate said component resources in accordance with a stored tariff; and
respond to said request by accumulating the charges for said component resources in providing said customer with a charge for said multi-site service.

This allows a customer to be charged for a multi-site service in real time.

According to a separate aspect of the present invention, there is provided a method of operating a communications network, comprising:
i) operating a network resource advance booking system to:
   a) receive a user-specified session description in advance of a user communications session, which session description includes an indication of the time and duration of said session;
   b) convert said session description to network management commands;
   c) transmit said network management commands to the network, which commands cause the network to reserve network resources for the user-specified session at the appropriate time; and
   d) forward the user-specified session description to a billing system associated with said communications network, said billing system billing for the reserved resources.

By re-using the necessary breakdown of a composite communications service into network management commands at the time the service is provisioned to feed the network's billing system, a straightforward method of recording both the composite service and its constituent parts in detailed or summary bills for the customer is provided.

By way of example only, specific embodiments of the invention will now be described with reference to the accompanying Figures in which:
Figure 1 shows a communications network for providing a virtual private network and video conferencing service to an enterprise customer, together with associated support systems;
Figure 2 shows a sequence of messages passed between components of the communications network on a customer requesting a prediction of the charge for a multi-site video conference;
Figure 3 shows a sequence of messages passed between components of the communications network in response to a customer requesting a multi-site video conference; and
Figure 4 shows a sequence of messages passed between components of the communications network on a customer requesting a list of charges for composite services and/or components of composite services.

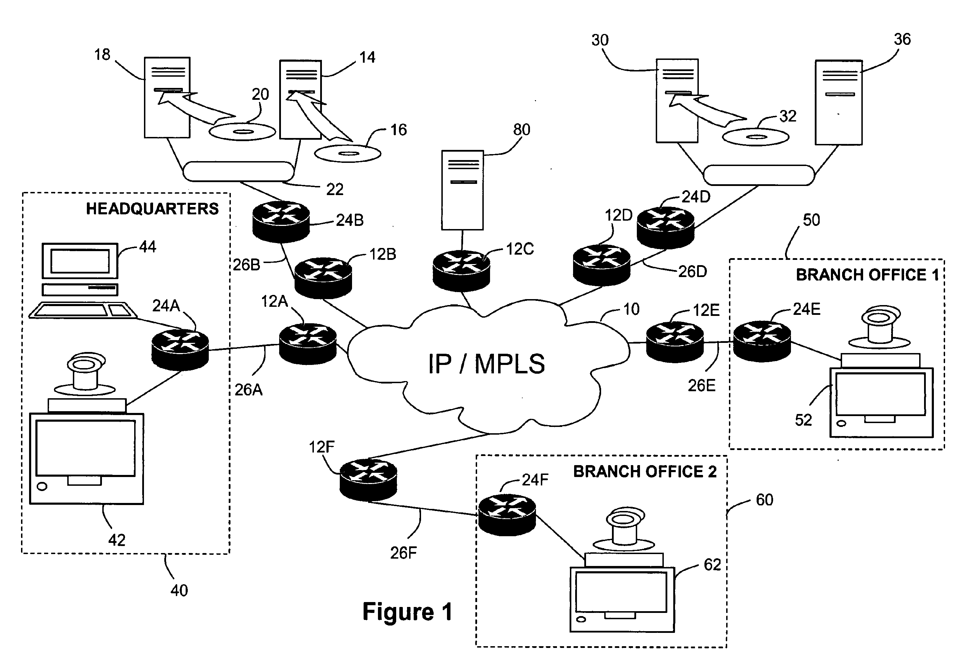

Figure 1 shows an IP/MPLS (Internet Protocol / Multi-Protocol Label Switching) network 10 which is used by a network operator as a core network and to provide a large number of IP-VPNs (Virtual Private Networks) for various enterprise customers. As will be understood by those skilled in the art, the IP/MPLS network 10 provides label switched paths between gateway routers 12A - 12F. When operating as an ingress router, each gateway router identifies the gateway router to which the packet is to be sent, assigns each IP packet it receives to a Class of Service (CoS) in dependence upon information found in that packet and then the labels the packet with a label it applies to all packets assigned to the same CoS and destined for the same egress router (or same set of egress routers for a one-to-many or many-to-many communication). Using these labels the IP/MPLS network offers different Classes of Service to different traffic streams. In the present embodiment, the applicant's six conventional QoS classes are used, namely:
CoS level 6 [Expedited Forwarding (EF)] - used for Voice over IP
CoS level 5 [Assured Forwarding 4 (AF4)] - used for multi-media applications such as media streaming
CoS level 4 [Assured Forwarding 3 (AF3)]
CoS level 3 [Assured Forwarding 2 (AF2)]
CoS level 2 [Assured Forwarding 1 (AF1)]
CoS level 1 [DE] (default) - used for non-critical traffic

Assured Forwarding classes 3, 2, and 1 offer three further levels of decreasing priority to applications.

The network operator manages the IP/MPLS network 10 using policy-based management which includes the assignment of incoming IP packets to different classes of service. In the present case, policies are loaded onto the gateway routers 12A to 12F from the Policy Charging and Rules server 14 which operates in accordance with policy-driven network management software installed upon it from CD-ROM 16.

Those policies will configure the gateway routers to police the rate at which a customer site sends traffic in each of the CoS classes onto the IP/MPLS network 10. For example, a policy might configure the maximum amount of traffic in each class to be placed onto the IP/MPLS network 10 as follows:
Domain: Customer.com
Link: Headquarters
Bandwidth (Mbps): 2
EF Allocation: 10%
AF4 Allocation: 30%
AF3 Allocation: 20%
AF2 Allocation: 20%
AF1 Allocation: 10%
DE Allocation: 10%

Where the customer exceeds these agreed traffic limits without requesting a bandwidth increase beforehand, then the excess traffic sent by the customer is simply discarded. Alternatively the traffic might be sent but marked and a penalty charge levied for the excess traffic.

In order to support on-demand provision of network services, the network operator provides customer-accessible web portal server computer 18. In the present embodiment this is connected to the same Local Area Network 22 (hereinafter 'management LAN 22') as the Policy Charging and Rules Server 14. The management LAN 22 is connected to the IP/MPLS network 10 via an access router 24B which is connected to gateway router 12B by communications link 26B. The web-portal server computer 18 is provided with customer-interface software which presents a customer with a web-page offering the customer various services as will be described in more detail below. The customer-interface software collects a request from a customer (e.g. via an HTML form) and passes it to the Policy Charging and Rules Server 14 which passes on that request in accordance with policies stored on its hard disk and set by the network administrator.

Also connected to the IP/MPLS network 10 is a billing and charging LAN 34 which connects an Online Charging System server 30 and an Offline Billing System 36. The Online Charging System server 30 is controlled by online charging and rating software loaded from CD-ROM 32. A suitable platform for providing such charging and rating functionality is Openet's Fusionworks available from Openet, 6 Beckett Way, Park West Business Park, Dublin 12, Ireland. As will be explained below, many requests made by a customer via the web-portal server 18 will require the involvement of the Online Charging System server 30 in providing a response to the customer's request. When a charge is raised by the Online Charging System server 30 it will be sent via the LAN 34 to the Offline Charging System where it will be added to the customer's bill (usually electronic). At a predetermined time interval that bill will be communicated to the customer. Many enterprise customers require the network operator to provide a consolidated bill for all their sites to a single site which houses those personnel responsible for querying and payment of communications bills. The offline Charging System is responsible for the supply of such bills at regular intervals agreed with the customer.

Although not shown in the Figure, it is to be understood that the Online Charging System server 30 might also provide the customer with a real-time indication of the customer's account with the network operator.

The billing and charging LAN 34 is connected to the IP/MPLS network 10 via an edge router 24D, communications link 26D and gateway router and is thus in digital communication with the management LAN 22.

The customer sites interconnected by the IP/MPLS network 10 include a headquarters site 40, a first branch office site 50 and a second branch office site 60. The IP/MPLS network 10 provides these three customer sites with a virtual private network between them. A virtual private network means that the customer is provided with what appears to him to be a private network dedicated to him, but which in fact is provided by provided him with a share of the resources of the public IP/MPLS network 10. The headquarters communications equipment includes a video conferencing terminal 42 and a customer PC 44 which are connected to the IP/MPLS network 10 via an access router 24A, a communications link 26B, and an edge router 12A. In reality of course, there would be hundreds or thousands of computers, printers, telephones and the like within the enterprise's headquarters which would be connected via the access router 24A to the IP/MPLS network 10 - however, only those necessary to illustrate the present embodiment are shown in the Figure.

The personal computer 44 is provider with browser software which enables the customer to view the web portal pages served by the web portal server 18.

The first branch office 50 is connected to the IP/MPLS network 10 via gateway router 12E, communications link 26E and access router 24E. The communications equipment within the first branch office 50 includes a video conferencing terminal 52 which is connected to access router 24E which is in turn connected to gateway router 12E via communications link 26E.

The second branch office 60 is connected to the IP/MPLS network 10 via gateway router 12F, communications link 26F and access router 24F. The communications equipment within the second branch office 60 includes a video conferencing terminal 62 which is connected to access router 24F which is in turn connected to gateway router 12F via communications link 26F.

The network operator enables video conferences by attaching a video conference bridge 80 to the IP/MPLS network 10 via gateway router 12C. As will be understood by those skilled in the art, video signals will be sent from one or more of the video conference terminals to the video conference server from where they will be relayed to the other video conference terminals involved in the video conference.

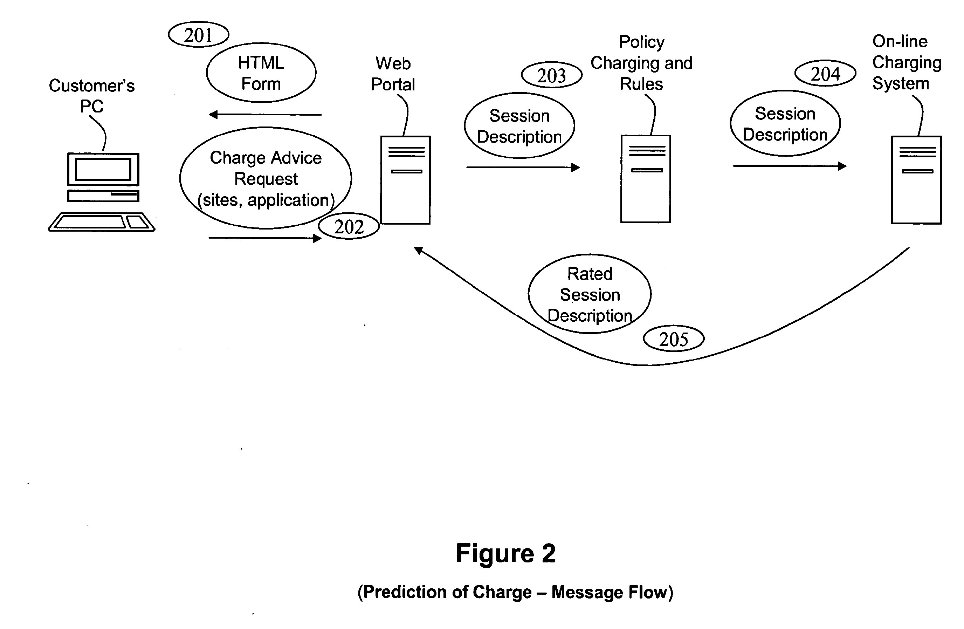

Figure 2 shows the messages which flow between the customer's personal computer and the management and billing computers of the network operator in the event that the customer requests to be informed of the cost of composite service in advance of actually placing an order for that service.

On browsing to the web portal from the web portal server 18, the web portal sends an HTML form message 201 which is displayed of the customer's personal computer 44. The HTML form which invites the user to enter details of the composite multi-site service which he would like to be provided on-demand.

The interface will include a drop-down menu into which the user can enter the type of application / service he requires (for example, the drop-down list might include video conference, multicast video stream, temporary capacity upgrade for site-to-site link and so forth).

For a video conference, it is assumed that video signals will be sent from each site to a video conference bridge, and that the video conference bridge will then relay those video signals to the other parties involved in the video conference.

The form also includes a field into which the date, start time, and duration of the application can be entered by the customer.

The user can then choose which sites are to participate in the application / service and, for each site, specify the IP/MPLS network capacity required to the other sites involved in the application.

Where the user has selected a conference service which uses a conference bridge provided by the network operator, then the form requires the user to specify the conference bridge to be used. The user is then asked to enter the IP/MPLS network capacity required from the site to the video conference bridge 80, and IP/MPLS network capacity required for video signals relayed by the video conference bridge 80 to each of the other sites involved in the conference. In each case, the user is also asked to specify the Class of Service in which the IP/MPLS network capacity is to be provided (the class of service might instead be decided by the web portal server automatically in dependence upon the application selected by the customer).

The form includes two buttons labelled 'Advice of Charge' and 'Book'.

If the user presses the 'Advice of Charge' button, then the web portal server 18 sends a charge advice request message 202 to the Policy Charging and Rules Server 14. That message includes a description of the composite service session - in this case, those details would include the capacity and quality of each of the communication links to be provided between the three sites and the video conferencing bridge 80.

For example the session description might contain the following fields and values:

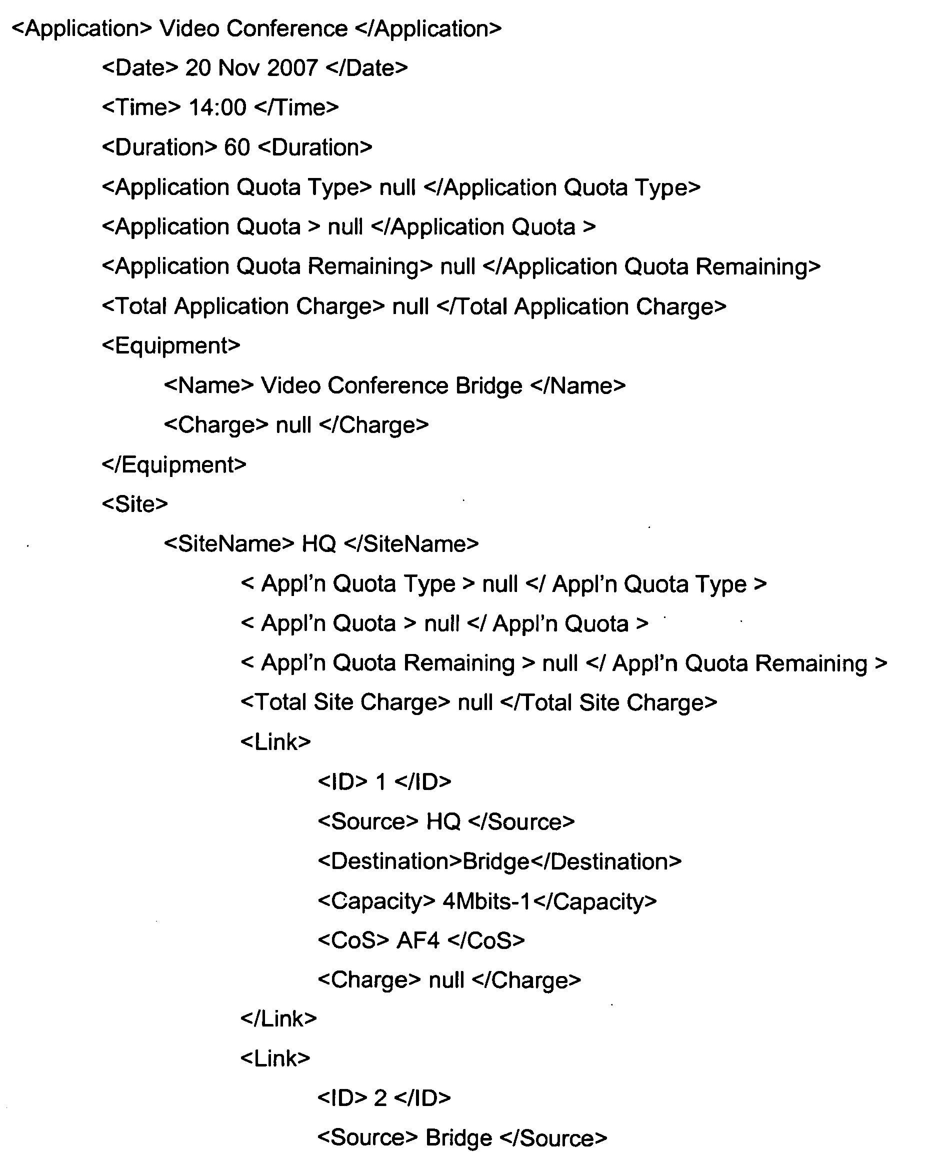

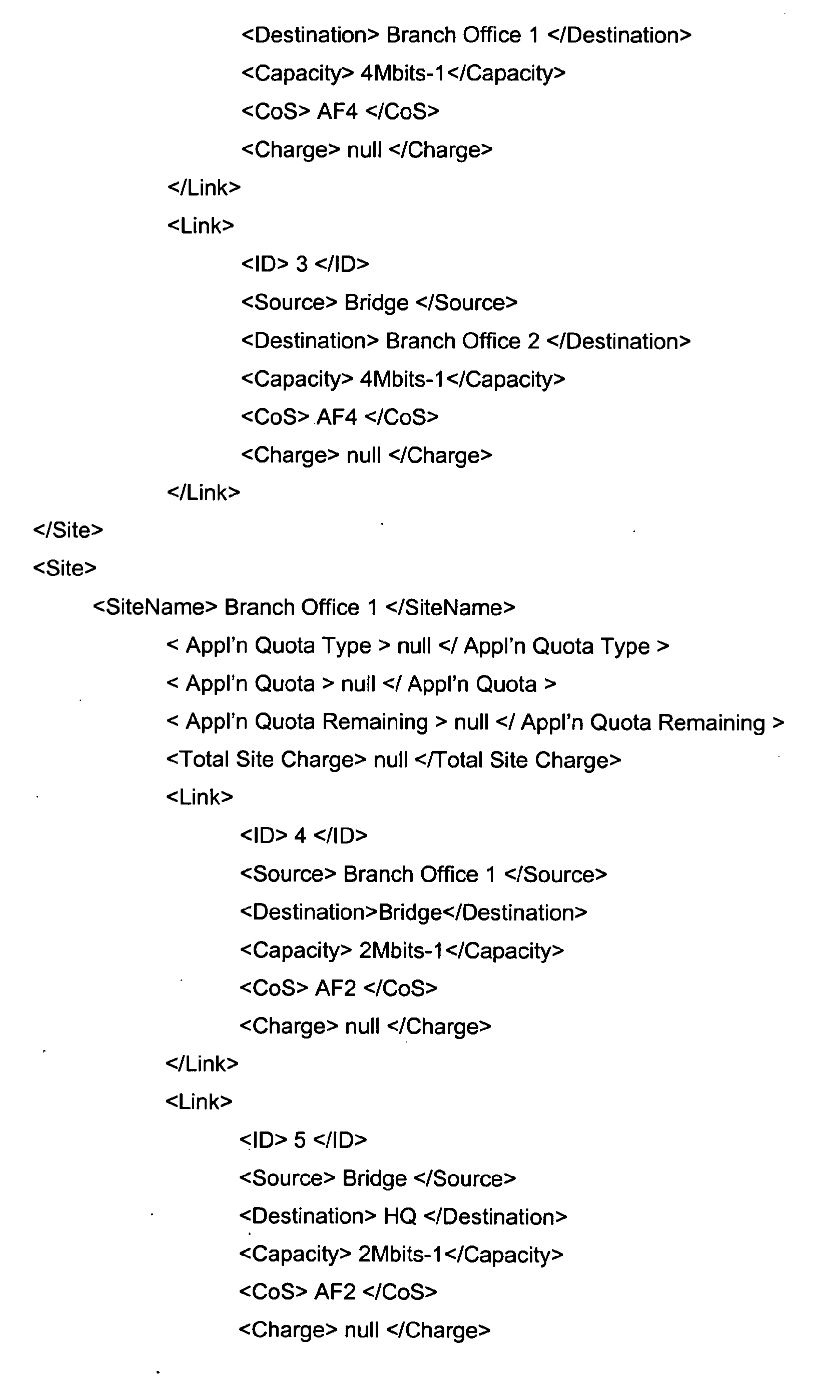

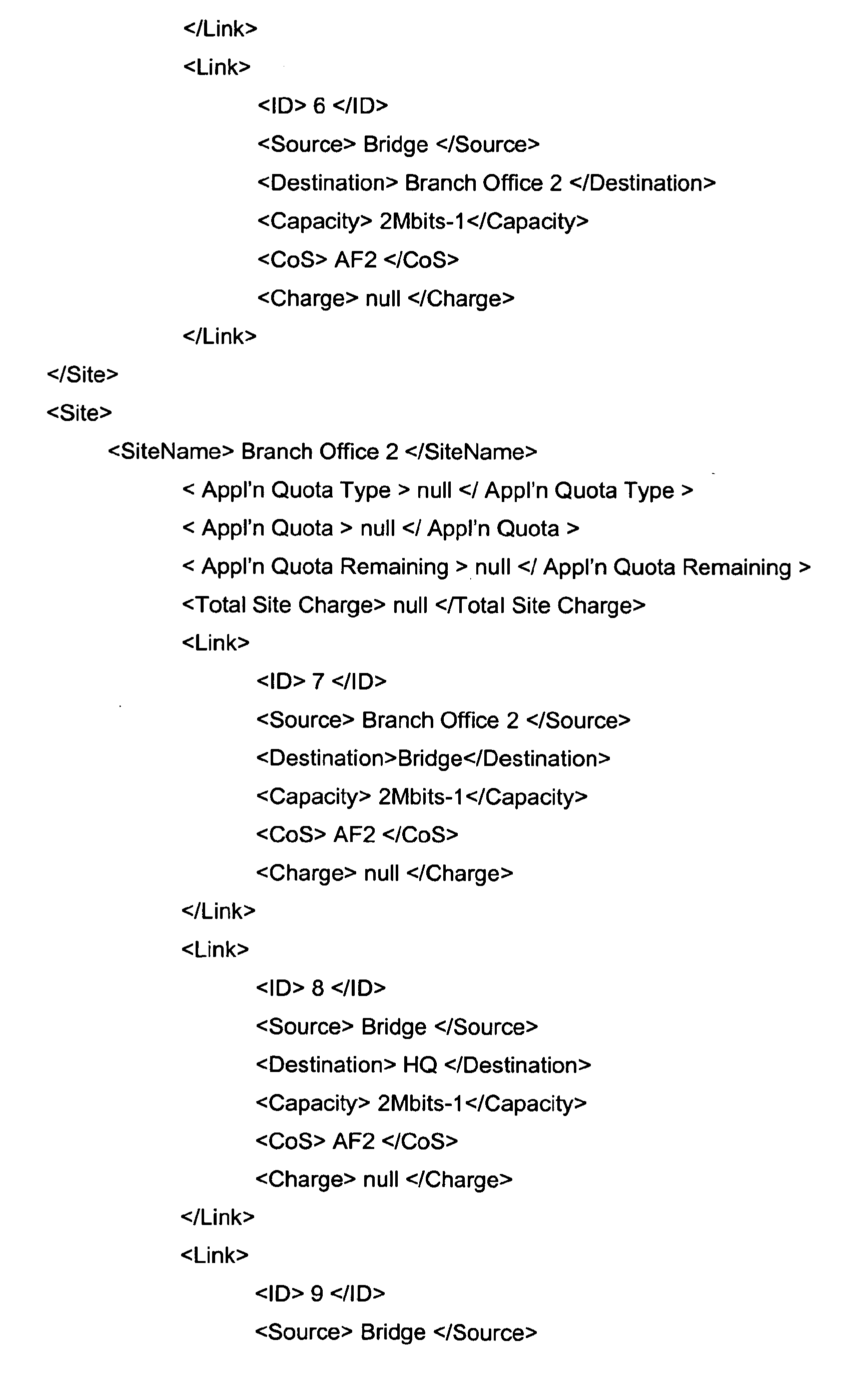

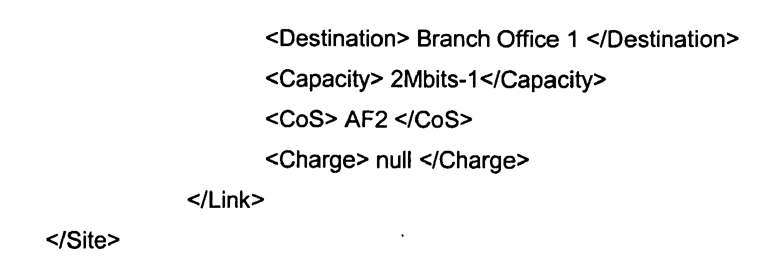

Those skilled in the art will recognise this as an XML file describing a video conference between HQ and Branch Office 1 and Branch Office 2 from 14:00 to 15:00 on 20/11/2007 which requires the use of a video conference bridge and three component network links for each of the three sites involved. The links (ID's 1, 2 and 3)associated with the HQ site provide for the flow of video traffic from the headquarters to the branch offices and require the IP/MPLS network 10 to provide a relatively high Class of Service (Assured Forwarding 4 in this example) and a relatively high bandwidth (4Mbits-1 in this example). The links (ID's 4, 5 and 6) associated with the Branch Office 1 site provide for the flow of video traffic from Branch Office 1 to the Headquarters site and to the Branch Office 2 and as such require the IP/MPLS network 10 to provide a lower Class of Service (Assured Forwarding 2 in this example) and a lower bandwidth (2Mbits-1 in this example). The links (ID's 7, 8 and 9) associated with the Branch Office 1 site provide for the flow of video traffic from Branch Office 1 to the Headquarters site and to the Branch Office 2 and as such require the IP/MPLS network 10 to provide a lower Class of Service (Assured Forwarding 2 in this example) and a lower bandwidth (2Mbits-1 in this example). Each link has a charge associated with it - initially set to a null value.

This session description is sent by the web portal server 18 to the Policy Charging and Rules server 14 in a session description message 203. On receiving the message, the Policy Charging and Rules server 14 checks that no policies relating to this customer forbid the provision of the on-demand application, and if not, forwards the session description onto the Online Charging System server 30 in a session description message 204 which it includes as a parameter to an active rate method provided as part of the software running on the Online Charging System server 30.

On receiving the session description message 204, the Online Charging System server 30 calculates, for each of the nine components of the composite video conferencing service, the number of units of resource consumed by the user - where the number of units might be the requested bandwidth multiplied by a factor which is greater for different classes of service. For example, in terms of the applicant's six classes of service model, the factors might be:
CoS level 6 [EF] = 5 units
CoS level 5 [AF4] = 4 units
CoS level 4 [AF3] = 3 units
CoS level 3 [AF2] = 2 units
CoS level 2 [AF1] = 1 unit
CoS level 1 [DE] (default) = 0 units

The Online Charging System server 30 then calculates the charge for each component of the request by calling a rating function included with the charging and rating software which accesses a unit costs of links and rented equipment stored in its persistent memory.

For example, if the costs of links were to be, say, £2 per Mbits⁻¹ per hour for AF4 links and £1 per Mbits-1 per hour for AF2 links, and the cost of the video conference bridge £5 per hour per site, then the rated session description message would take the following form (the fields altered by the rating process are shown in bold below).

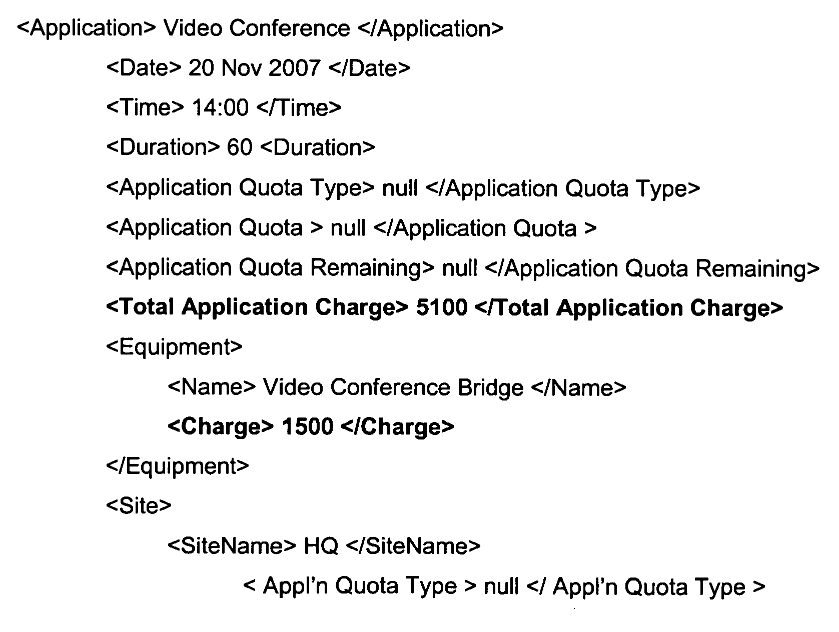

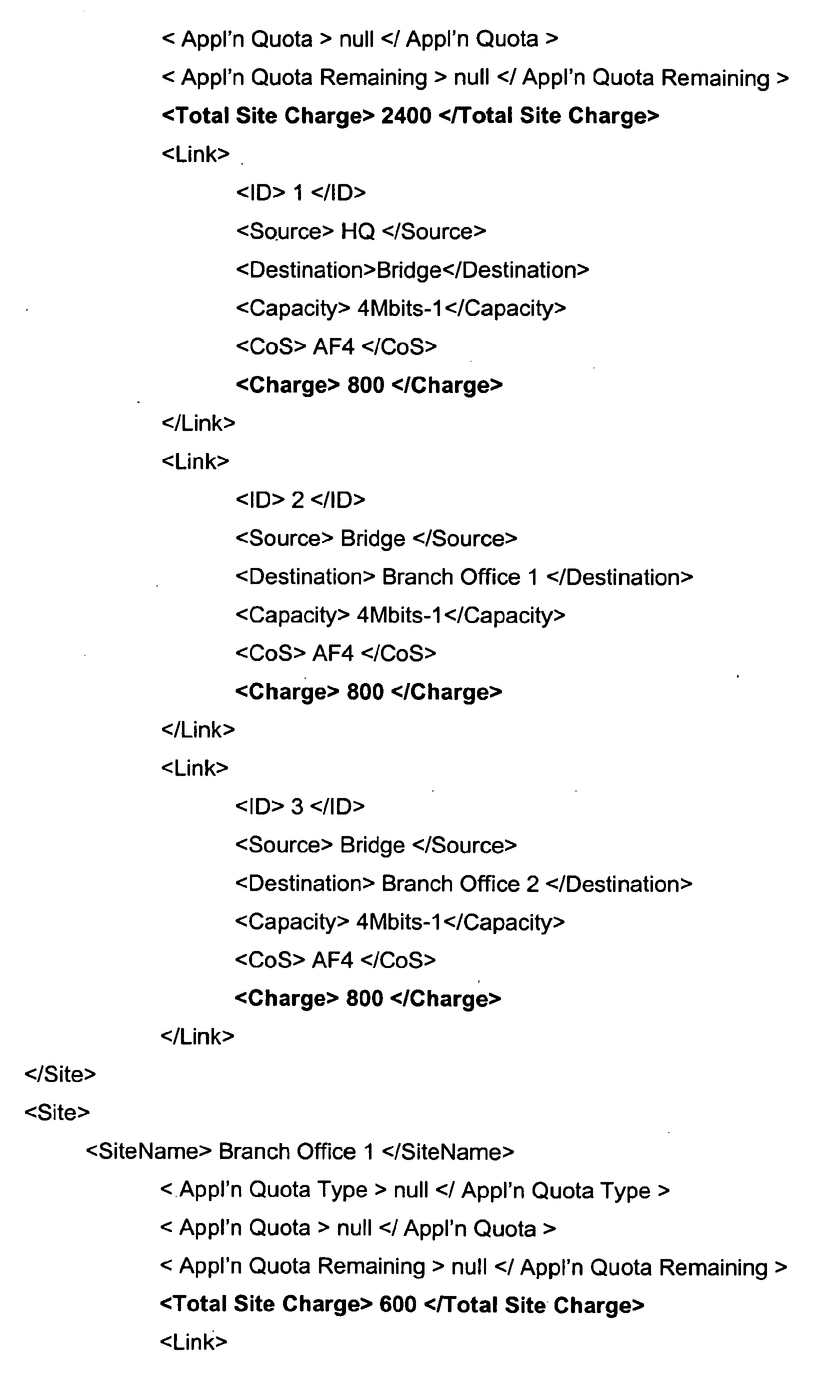

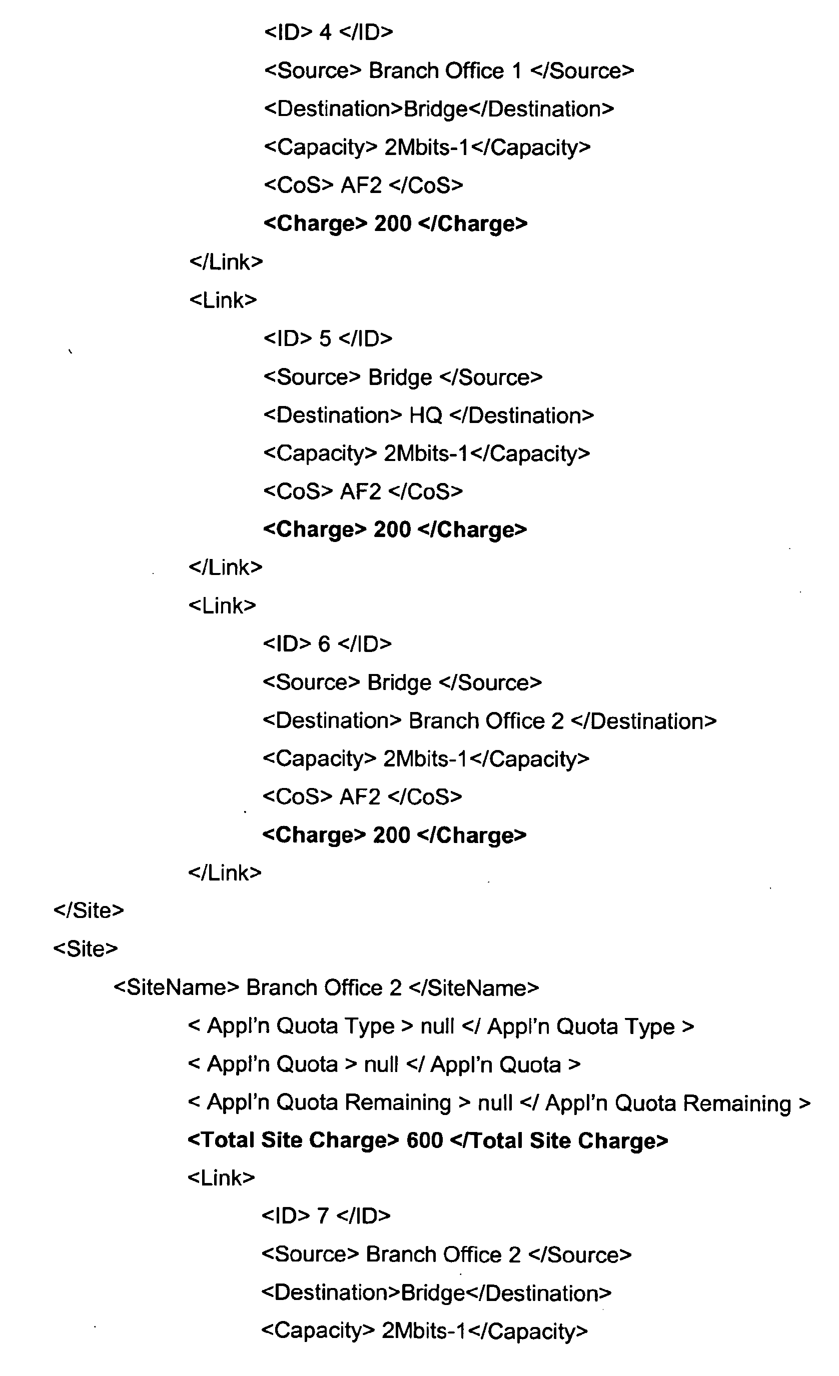

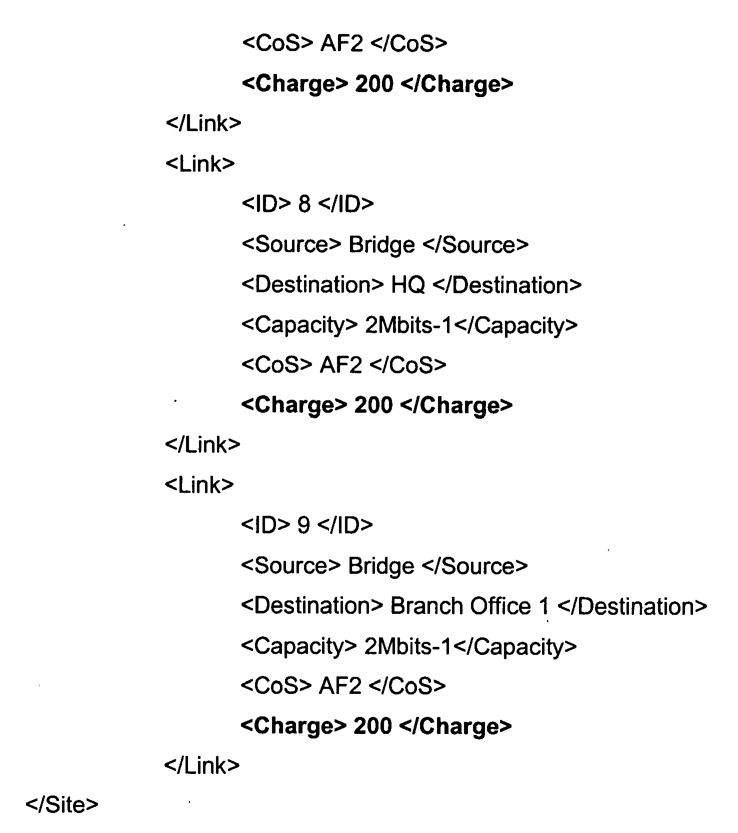

The Online Charging System 30 then goes on to set Quota fields in accordance with quotas stored in the Online Charging System's persistent memory to provide a credit-controlled, rated session description as seen below (again the fields changed in this part of the process are shown below):

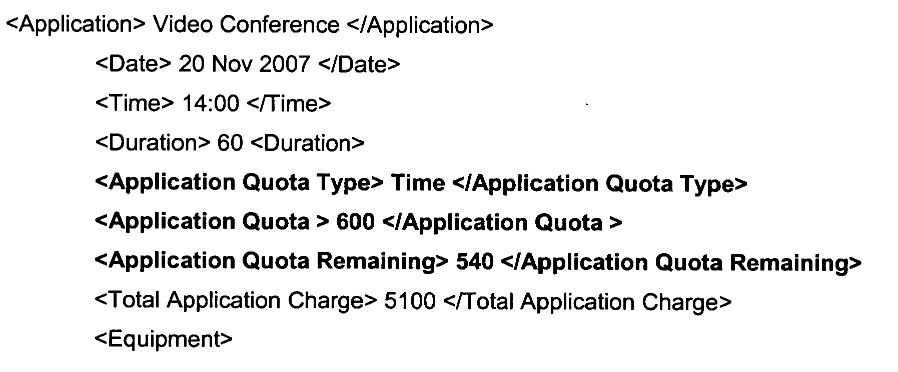

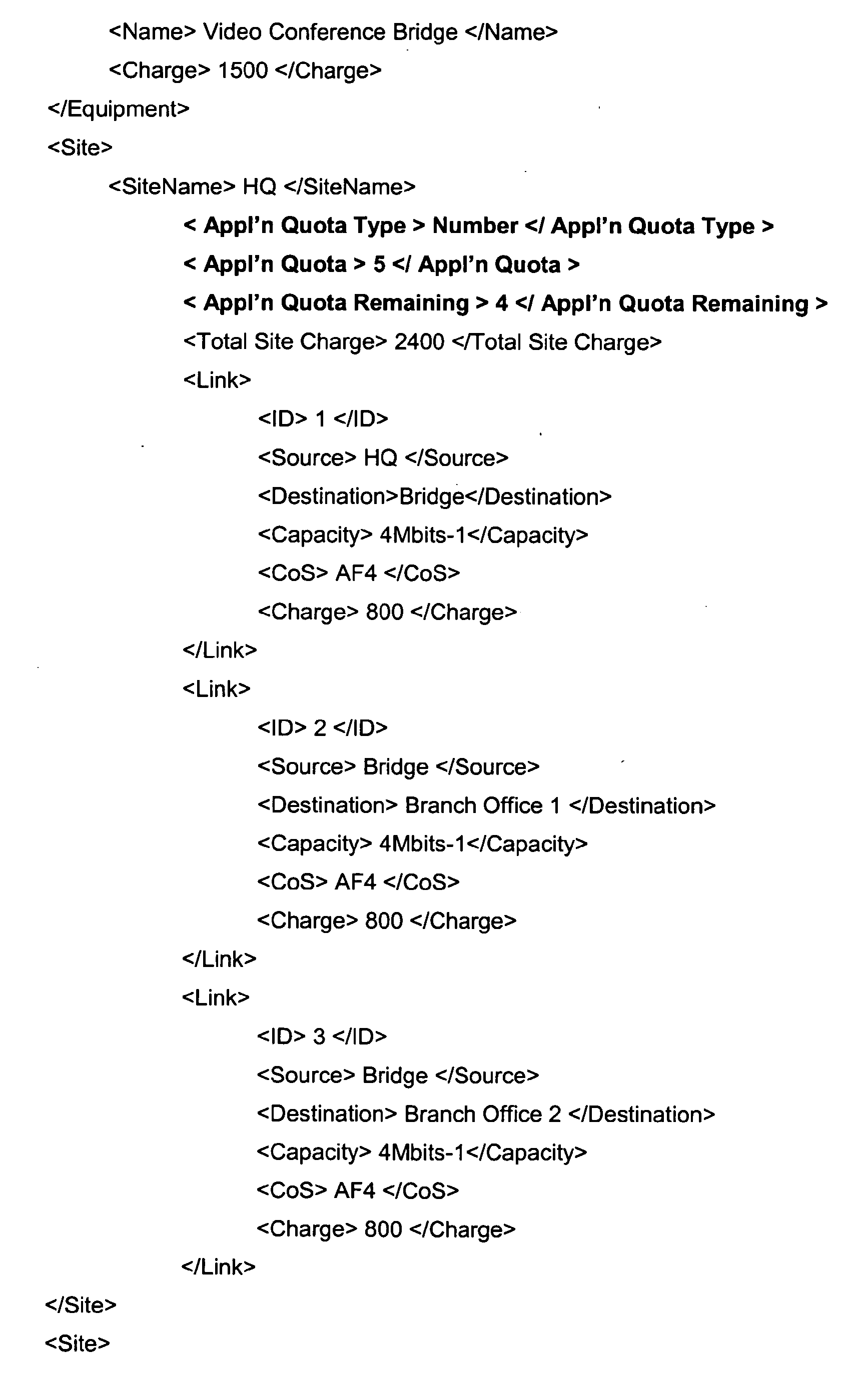

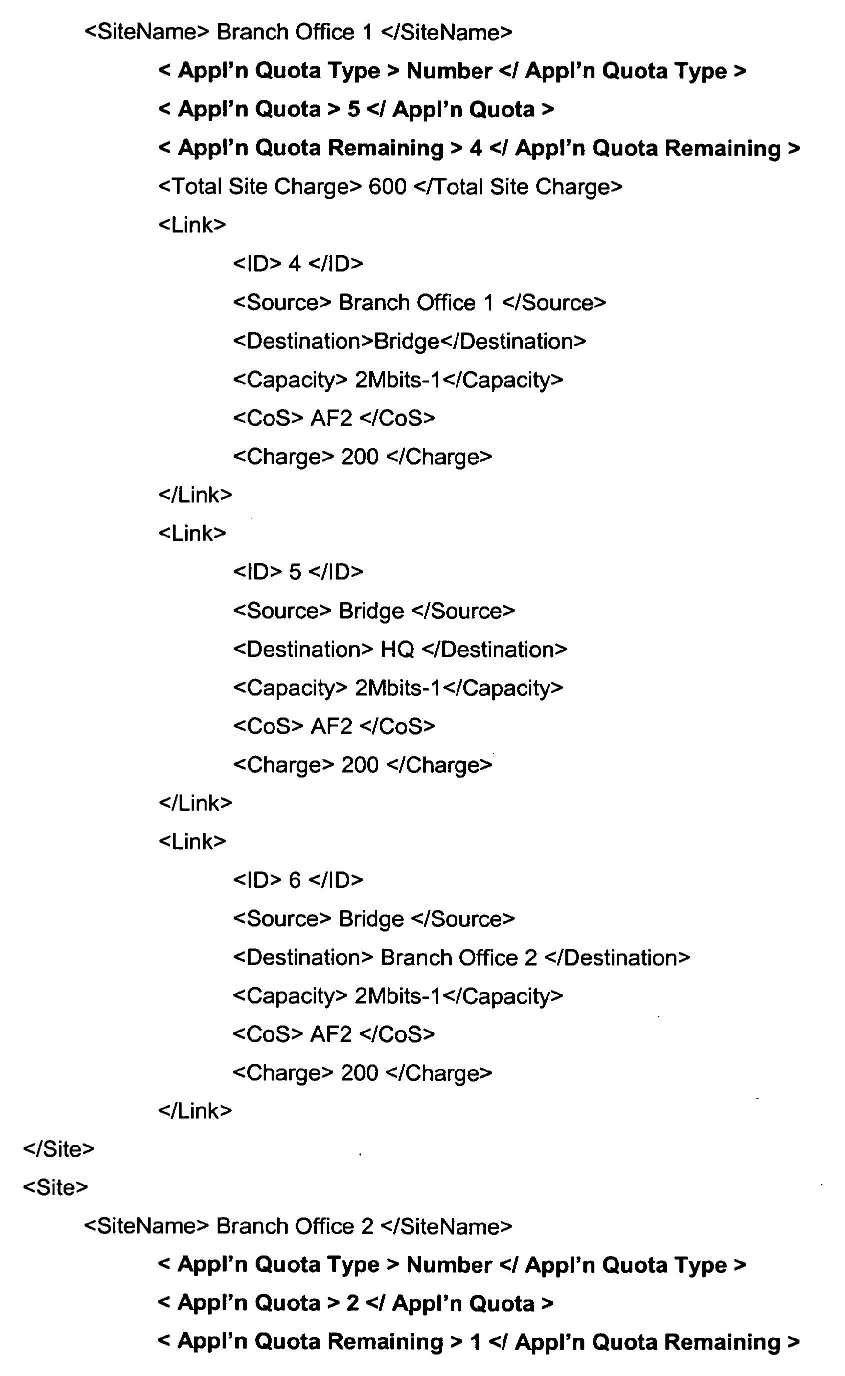

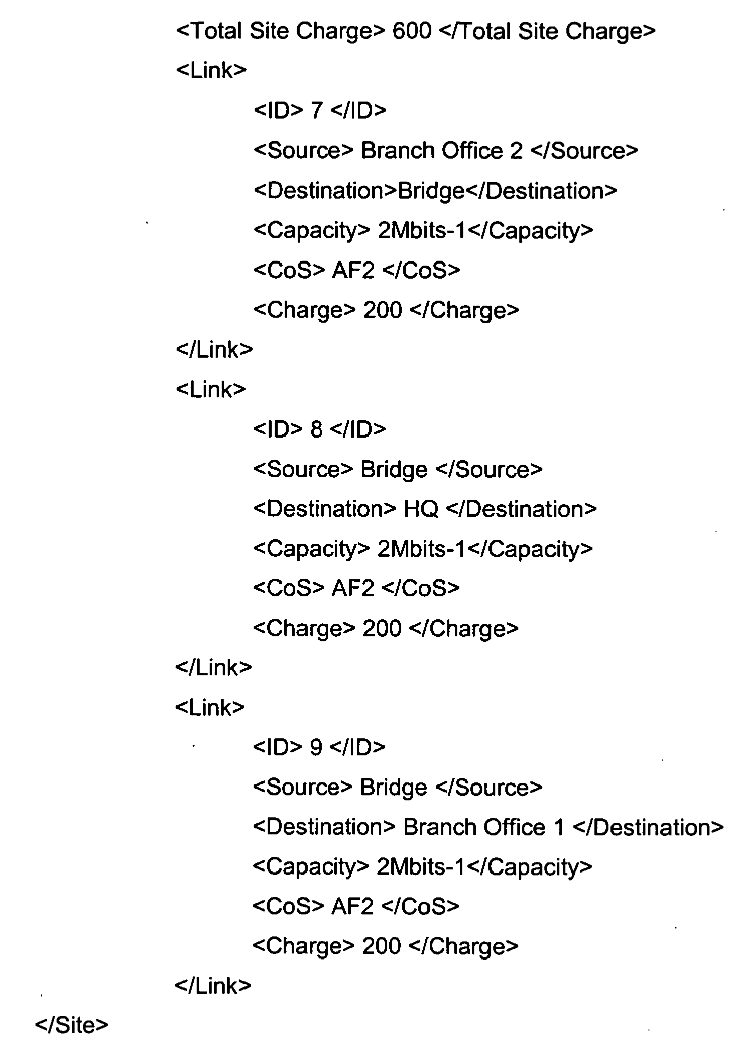

Note that quotas can be set per application or per-application and site. The limits can be set in terms of time (e.g. limit of ten hours video conferencing per week for this customer), number (e.g. only two video conferences involving branch office 1 per week), cost (only £50 per week to be spent on video conferences per week), usage (only 100GBytes of video conference traffic for headquarters site per week).

The Online Charging System server then .sends the credit-controlled rated session description 205 back to the web portal server 18.

Where the web portal server finds that one or more quotas that would be exceeded by the proposed session, it sends a session-barred web-page to the customer's PC 44 which highlights the quotas which have been exceeded.

If, on the other hand, the Online Charging System server finds that no quotas would be exceeded by the proposed session, it sends an advice of charge web-page to the customer's PC 44 which includes the information seen in the expanded rated session description message.

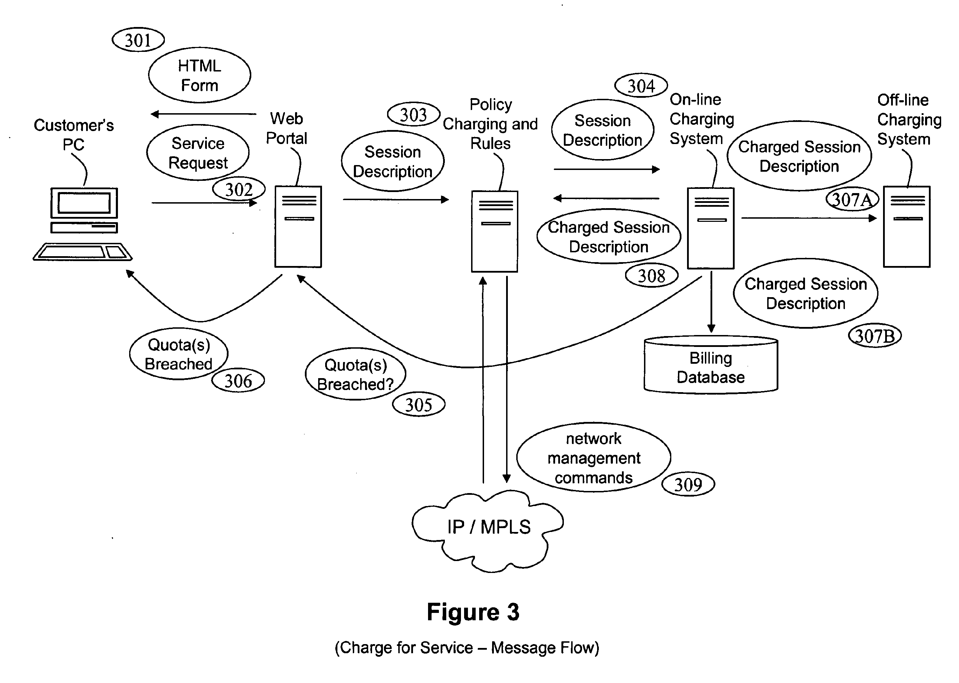

Figure 3 shows the processing carried out by the management LAN and the billing and charging LAN in response to receiving a request for the provision of resources to support a multi-site application from a customer.

The processing begins by the customer operating the browser program on his personal computer 44 to view an HTML form 301 provided by the web portal server 18. This HTML form is, in the present embodiment, identical to that described above in relation to the Advice of Charge request. In relation to Figure 3 however, the customer enters details of the multi-site application he requires, and clicks on the 'Book' button.

The submission of the form in this way triggers the web portal server computer 18 to send the session description to the policy-charging and rules server 14. The policy-charging and rules server 14 checks that the requested service is not barred by any policy applicable to this customer, and, if not, sends the session description 303 as a parameter to a call to an active charge method provided as part of the software running on the Online Charging System server 30.

The active charge method itself includes a call to the active rate method which is used in order to calculate the cost of the multi-site application in the same way as was described above in relation to the advice of charge processing. If any quotas are exceeded, then a booking denied message is returned to the web portal server 18 which in turn serves the customer with a web-page highlighting the quotas which have been exceeded. If no quotas are exceeded, then the active charge method further includes a function which debits the quotas and accounts associated with this customer in accordance with the values provided in the rated session description returned by the active rate method. In addition, the Online Charging System server 30 saves the rated session description to a billing database and to the Offline Charging System 36. The Online Charging System also returns the charged session description 306 to the Policy Charging and Rules-Server as a parameter in a reserve_network_resources method call. The Policy Charging and Rules Server takes the charged session description 306, extracts the component resource reservations involved in the provision of the multi-site application and adds in the time and duration of the session. In the above example, the Policy Charging and Rules server would therefore generate a set of link reservations from the charged session description. These would include an equipment reservation, and nine link reservations (only two of which are shown below):

```
                      <Equipment>
                            <Name> Video Conference Bridge </Name>
                            <Date> 20 Nov 2007 </Date>
                            <Time> 14:00 </Time>
                            <Duration> 60 <Duration>
                      </Equipment>
 
                      <Link>
                            <ID> 1 </ID>
                            <Date> 20 Nov 2007 </Date>
                            <Time> 14:00 </Time>
                            <Duration> 60 <Duration>
                            <Source> HQ </Source>
                            <Destination>Bridge</Destination>
                            <Capacity> 4Mbits-1 </Capacity>
                            <CoS> AF4 </CoS>
                      </Link>
                      <Link>
                            <ID> 2 </ID>
                            <Date> 20 Nov 2007 </Date>
                            <Time> 14:00 </Time>
                            <Duration> 60 <Duration>
                            <Source> Bridge </Source>
                            <Destination> Branch Office 1 </Destination>
                            <Capacity> 4Mbits-1 </Capacity>
                            <CoS> AF4 </CoS>
                      </Link>
```

When the time for the video conference arrives, then the Policy Charging and Rules Server issues corresponding network management commands to the gateway routers as follows:
Gateway Router 12A:
   Provide 4Mbits-1 AF4 bandwidth to packets with source address = video conference terminal 42 for 1 hour starting at 14:00 on 20/11/2007
Gateway Router 12E:
   Provide 2Mbits-1 AF2 bandwidth to packets with source address = video conference terminal 52 for 1 hour starting at 14:00 on 20/11/2007
Gateway Router 12F:
   Provide 2Mbits-1 AF2 bandwidth to packets with source address = video conference terminal 62 for 1 hour starting at 14:00 on 20/11/2007
Gateway Router 12C:
   Provide 4Mbits-1 AF4 bandwidth to packets with destination address = video conference terminal 42 for 1 hour starting at 14:00 on 20/11/2007; and
   Provide 2Mbits-1 AF2 bandwidth to packets with destination address = video conference terminal 52 for 1 hour starting at 14:00 on 20/11/2007; and
   Provide 2Mbits-1 AF2 bandwidth to packets with destination address = video conference terminal 62 for 1 hour starting at 14:00 on 20/11/2007.

The gateway routers respond by adjusting the rate at which they police traffic from the customers sites into the IP/MPLS network 10 for the booked duration of the video conference.

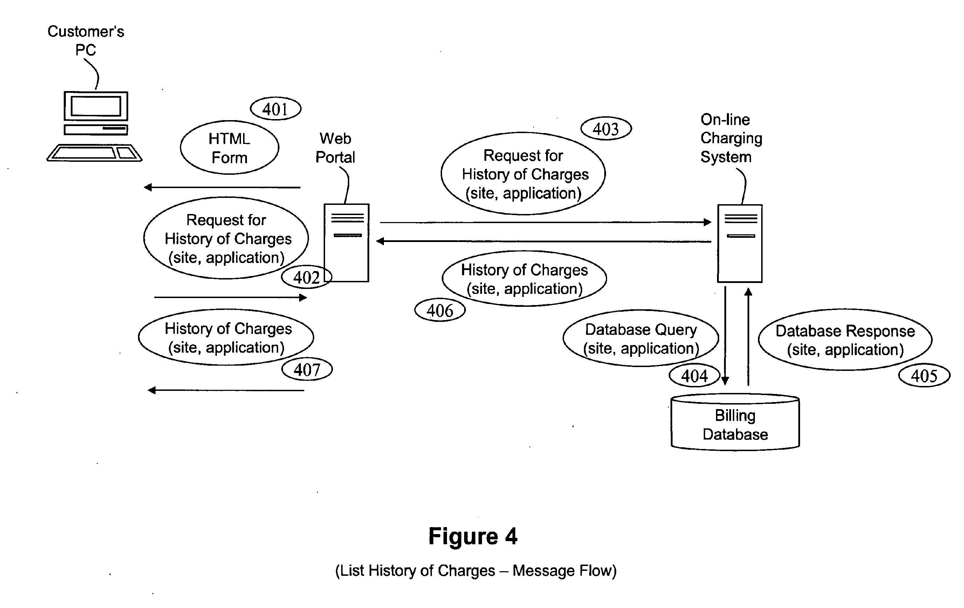

Figure 4 illustrates how a user may query the billing database maintained by the Online Charging System 30 in order to analyse their communications bill by site and/or by application - even for multi-site applications.

The billing database includes tables listing every instance of provision of network resource. In the present example, the billing database includes separate tables for instances of equipment rental and instances of capacity provision. In each table, each instance will be given a unique ID. For example, billing database records resulting from the video conference used in the example above might include the following records in an equipment rental table:
Equipment Rental Charge Element: E12345670
Customer ID: GB12345678
Application Type: Video Conference
Site: HQ
Equipment Type: Video Conference Bridge
Date: 20 Nov 2007
Time: 14:00
Duration: 60
Charge: 500

Equipment Rental Charge Element: E12345671
Customer ID: GB12345678
Application Type: Video Conference
Site: Branch Office 1
Equipment Type: Video Conference Bridge
Date: 20 Nov 2007
Time: 14:00
Duration: 60
Charge: 500

Equipment Rental Charge Element: E12345672
Customer ID: GB12345678
Application Type: Video Conference
Site: Branch Office 2
Equipment Type: Video Conference Bridge
Date: 20 Nov 2007
Time: 14:00
Duration: 60
Charge: 500
and entries in a link provision table - an example relating to the first of the links being:
Capacity Provision Charge Element: L87654321
Customer ID: GB12345678
Application Type: Video Conference
Site: HQ
Date: 20 Nov 2007
Time: 14:00
Duration: 60
Link Source: HQ
Link Destination: Bridge
Link Capacity: 4Mbits-1
Link CoS: AF4
Link Charge: 800

As will be understood by those skilled in the art, the provision of records which include both the site and the application to which the charge is attributed allows a user to see his communication cost broken down by site, and possibly then further broken down by application, or to see his communication cost broken down by application, and possibly then further broken down by site.

Returning to Figure 4, the list history of charges process is triggered by the user downloading an HTML form 401 from the web portal server 18. That form allows the user to select:
a) the time period which the listed charges are to cover;
b) one or more (or indeed all) sites to be included in the list; and
c) one or more (or indeed all) applications to be included in the list

This selection is returned to the web portal server 18 which forwards the request 403 to the Online Charging System 30. The Online Charging System generates a query which mirrors the request and passes that query to the billing database. The billing database returns the records which meet the criteria a), b) and c) entered by the user onto the HTML form 401.

The Online Charging System 30 may then derive summary reports from the records retrieved from the database and send those summary reports and/or the itemised billing records themselves back to the web portal server 18. The web portal server then reformats that information into a suitable form for display on the customer's PC 44.

It will be seen how representing a multi-site application with a data structure which includes distinct entries for the component resources provided in providing the multi-site application whilst combining those distinct entries into a compound entry representing the application, a straightforward implementation of various customer interfaces to the network's billing systems results.

It will also be seen how the above embodiment enables real-time / online charging to multi-site multi-user organisations. The embodiment also allows the same format of charging information to be carried both within the network operator's domain, (between network equipment and charging systems), and exposed to customers (either service providers or end customer organisations) and end users.

It will seen how the above embodiment could be used in implementing new interfaces on network equipment and charging/billing systems or to adapt or extend existing interfaces (e.g. those defined by 3GPP OCS / Parlay / Web Services).

It will also be seen how the above embodiment allows customer organisations to view and manage their communications and networked IT charges on a site-by-site basis, and also allows use of quotas and caps both on a per-site and per-application basis.

It will yet further be seen how the session description data structure is used as part of a request-response mechanism, where the initial request towards the online charging system contains the entire data structure, but where all charging elements are set to NULL values (so it simply contains the fields which need to be populated). The online charging system then populates all the fields with data from its database - which may be returned from the 3GPP rating and/or account management functions, then returns the result in the response message.

Many variations on the above embodiment are possible. For example:
i) in the above embodiment, the charges raised were raised against the provision of a given amount of network capacity at a given quality of service, and for the rental of a shared piece of network equipment - the video conference bridge. In other embodiments, charges might be raised against network connectivity, bandwidth, application instances and IT resources.
ii) in the above embodiment, the messages passed between the network elements were expressed in XML. However, the same data structure could instead be encoded using XDR or Diameter - in which case the individual data elements would be represented as attribute value pairs or grouped attribute value pairs.
iii) the interface between the portal and the online charging system may be implemented by a range of protocols, including Diameter, XML, Web Services, Parlay or Parlay X, and includes situations where one or more functions are present in the path between web server and online charging system, such as a Parlay or Parlay X gateway, or a policy management server, where these functions may be implemented either in hardware or software. Therefore this implicitly includes situations where multiple protocols are used across this interface.
iv) whilst in the above example, a session description which listed site-specific components within a session was used. In other embodiments, a site description which lists application-specific components might be transferred between network elements.

In summary of the above, a multi-site service charging protocol is disclosed. A data structure 303, 308 which includes chargeable elements relating generally to the multi-site service, and chargeable elements relating to the provision of network resources for each site involved in the multi-site service is transferred between a customer terminal 44 and an online charging system 30 in the network. In this way a customer who provides a description of a multi-site service is able to instantaneously receive advice of the charge for the multi-site service, and the network operator is able to instantaneously charge the customer for the multi-site service. Furthermore, the customer is later able to analyse his communications costs broken down by multi-site service and/or by site.

## Claims

1. A data structure representing a multi-site network service which data structure includes one or more charges generally relating to the provision of the multi-site network service and, for each site involved in the multi-site network service, site-specific charges for at least some of the component resources used in providing the multi-site application to the site.

2. A data structure according to claim 1 wherein said multi-site network service involves three or more sites.

3. A data structure according to claim 1 wherein either said application entries or said site-specific entries include quotas which set limits on the amount of a multi-site network service a customer, or a specific customer site might use.

4. A data structure according to claim 1 wherein both said application entries and said site-specific entries include quotas which set limits on the amount of a multi-site network service a customer, or a specific customer site might use.

5. A method of rating multi-site services in a communications network, said method comprising operating a rating computer to:
receive a session description listing component resources required in providing said multi-site service; and
rate said component resources in accordance with a stored tariff.

6. A method according to claim 6 wherein said customer session description is received from a customer terminal, said method further comprising the step of returning charging data to said customer which indicates the charge for said multi-site service.

7. A method according to claim 6 wherein said customer session description and said charging data are data structures in accordance with claim 1.
